# EUROPÄISCHE PATENTSCHRIFT

(11) **EP 4 147 558 B1**
(45) Veröffentlichungstag und Bekanntmachung des Hinweises auf die Patenterteilung: **17.06.2026**
(21) Anmeldenummer: 21195928.3
(22) Anmeldetag: 10.09.2021
(51) Int. Cl.: A01D 34/90, A01G 3/053, A01G 3/06, A01G 3/08, B25F 5/02, F02B 63/02, G07C 3/00

(54) **GARTEN-, FORST- ODER BAUBEARBEITUNGSGERÄT MIT DATENERFASSUNGSVORRICHTUNG**
GARDENING, FORESTRY OR CONSTRUCTION EQUIPMENT WITH DATA ACQUISITION DEVICE
APPAREIL DE TRAITEMENT HORTICOLE, SYLVICOLE OU DE CONSTRUCTION AVEC DISPOSITIF D'ACQUISITION DE DONNÉES

(43) Veröffentlichungstag der Anmeldung: 15.03.2023
(73) Patentinhaber: Andreas Stihl AG & Co. KG, 71336 Waiblingen (DE)
(72) Erfinder: FÖRG, Timo, 71456 Aspach (DE); DWORSCHAK, Jan, 71336 Waiblingen-Bittenfeld (DE)
(74) Vertreter: Patentanwälte Ruff, Wilhelm, Beier, Dauster & Partner mbB

(56) Entgegenhaltungen:
- EP-A1- 3 534 339
- EP-A1- 3 564 584
- EP-A1- 3 811 758
- EP-A1- 3 825 965
- DE-A1- 102016 201 802
- DE-A1- 102017 131 457
- US-A1- 2004 236 495
- US-A1- 2010 096 151

## Beschreibung

### ANWENDUNGSGEBIET UND STAND DER TECHNIK

Die Erfindung bezieht sich auf ein Garten-, Forst- oder Baubearbeitungssystem, ein motorangetriebenes Garten-, Forst- oder Baubearbeitungsgerät für ein solches Garten-, Forst- oder Baubearbeitungssystem und eine Vorrichtung für ein solches Garten-, Forst- oder Baubearbeitungssystem.

Die DE 10 2017 131 457 A1 offenbart ein elektrisches Gerät in Gestalt einer Werkzeugmaschine oder eines Energiespeichermoduls zur elektrischen Stromversorgung einer Werkzeugmaschine, wobei das Energiespeichermodul ein Modulgehäuse mit einer Geräteschnittstelle zur lösbaren Verbindung mit der Werkzeugmaschine aufweist, wobei die Werkzeugmaschine einen Antriebsmotor zum Antreiben einer Werkzeugaufnahme aufweist, an der ein zur Bearbeitung eines Werkstücks vorgesehenes Werkzeug angeordnet oder anordenbar ist, wobei der Antriebsmotor anhand eines Schaltelements der Werkzeugmaschine und/oder des Energiespeichermoduls schaltbar ist, wobei das elektrische Gerät eine Drahtlos-Kommunikationsschnittstelle zur drahtlosen Kommunikation mit einer Extern-Kommunikationsvorrichtung aufweist, die einen Bestandteil eines zur Absaugung von durch die Werkzeugmaschine erzeugten Staubs vorgesehenen Staubsaugers bildet, und wobei die Drahtlos-Kommunikationsschnittstelle zum Senden mindestens eines Steuerbefehls zum Steuern, insbesondere zum Einschalten und/oder zum Ausschalten, des Staubsaugers in Abhängigkeit von einem Schaltzustand des Schaltelements an die Extern-Kommunikationsvorrichtung über eine drahtlose Steuerverbindung ausgestaltet ist. Die Drahtlos-Kommunikationsschnittstelle ist zum Senden mindestens einer Anmeldenachricht an die Extern-Kommunikationsvorrichtung zur Herstellung der Steuerverbindung mit dem Staubsauger in Abhängigkeit von einem Schaltzustand des Schaltelements ausgestaltet.

### AUFGABE UND LÖSUNG

Der Erfindung liegt als Aufgabe die Bereitstellung eines Garten-, Forst- oder Baubearbeitungssystems, eines motorangetriebenen Garten-, Forst- oder Baubearbeitungsgeräts für ein solches Garten-, Forst- oder Baubearbeitungssystem und einer Vorrichtung für ein solches Garten-, Forst- oder Baubearbeitungssystem zugrunde, das und/oder die jeweils verbesserte Eigenschaften aufweist.

Die Erfindung löst diese Aufgabe durch die Bereitstellung eines Garten-, Forst- oder Baubearbeitungssystems mit den Merkmalen des Anspruchs 1, eines motorangetriebenen Garten-, Forst- oder Baubearbeitungsgeräts mit den Merkmalen des Anspruchs 8 und einer Vorrichtung mit den Merkmalen des Anspruchs 9.

Das erfindungsgemäße Garten-, Forst- oder Baubearbeitungssystem, insbesondere die Verstellung des Verbindungselements von der Freigabestellung in die Verbindungsstellung, ermöglicht eine Herstellung der mechanischen Verbindung und die Fixierung der elektrischen Verbindung, insbesondere integriert und/oder gleichzeitig bzw. in einem selben bzw. gemeinsamen Schritt. Somit ermöglicht dies einen Synergieeffekt.

Insbesondere braucht oder kann nicht ein weiterer Schritt zur Herstellung der mechanischen Verbindung und/oder der Fixierung der elektrischen Verbindung vorgesehen bzw. erforderlich sein.

Das Garten-, Forst- oder Baubearbeitungsgerät kann ein bodengeführtes und/oder handgetragenes Garten-, Forst- oder Baubearbeitungsgerät sein. Insbesondere kann handgeführtes, insbesondere handgetragenes, Garten-, Forst- oder Baubearbeitungsgerät bedeuten, dass das Garten-, Forst- oder Baubearbeitungsgerät eine Masse von maximal 50 kg (Kilogramm), insbesondere maximal 20 kg, insbesondere maximal 10 kg, insbesondere maximal 5 kg, und/oder minimal 1 kg, insbesondere minimal 2 kg, aufweisen bzw. haben kann. Das Garten-, Forst- oder Baubearbeitungsgerät ist eine Säge, insbesondere eine Kettensäge, ein Hoch-Entaster, eine Heckenschere, ein Heckenschneider, ein Gehölzschneider, eine Astschere, ein Blasgerät, ein Laubbläser, ein Sauggerät, ein Laubsauger, ein Reinigungsgerät, ein Hochdruckreiniger, eine Kehrwalze, eine Kehrbürste, ein Vertikutierer, ein Rasenmäher, ein Freischneider oder ein Trennschleifer.

Der Begriff "Empfang" kann synonym für den Begriff "Erfassung" verwendet werden. Zusätzlich oder alternativ kann die Erfassung automatisch sein. Weiter zusätzlich oder alternativ kann die Vorrichtung zur Erfassung von Werten der Betriebsdaten und/oder eines Werts der Größe ausgebildet sein. Weiter zusätzlich oder alternativ kann die Größe eine physikalische Größe sein. Weiter zusätzlich oder alternativ kann die Übertragung automatisch sein. Weiter zusätzlich oder alternativ kann die Vorrichtung zur Übertragung von Werten der Betriebsdaten und/oder eines Werts der Information ausgebildet sein. Weiter zusätzlich oder alternativ kann der Begriff "drahtlos" synonym für den Begriff "kabellos" verwendet werden. Weiter zusätzlich oder alternativ kann die Übertragung zu einem Endgerät sein. Beispielsweise kann das Endgerät basierend auf den übertragenen Betriebsdaten und/oder der übertragenen Information Auswertungen vornehmen und diese einem Benutzer bzw. Menschen optisch aufbereitet darstellen. Weiter zusätzlich oder alternativ kann die Vorrichtung als Connector bezeichnet werden.

Die Vorrichtung weist eine elektrische Erfassungs- und Auswerteeinrichtung und eine elektrische Kommunikationsschnittstelle, insbesondere und einen, insbesondere elektrischen, Datenspeicher und/oder einen, insbesondere elektrischen, Energiespeicher, auf. Die Erfassungs- und Auswerteeinrichtung ist zur Erfassung der Betriebsdaten und/oder der Größe ausgebildet. Die Erfassungs- und Auswerteeinrichtung ist zur Auswertung der erfassten Größe zur Ermittlung der Betriebsdaten und/oder der erfassten und/oder ermittelten Betriebsdaten zur Ermittlung der Information ausgebildet. Insbesondere kann die Erfassungs- und Auswerteeinrichtung einen Microcontroller aufweisen oder sein. Weiter zusätzlich oder alternativ kann der Datenspeicher zur Speicherung der, insbesondere erfassten und/oder ermittelten, Betriebsdaten, der, insbesondere erfassten, Größe und/oder der, insbesondere ermittelten, Information ausgebildet sein. Weiter zusätzlich oder alternativ kann der Datenspeicher einen flüchtigen Speicher wie ein RAM (Random Access Memory) und/oder einen nicht-flüchtigen Speicher wie einen FLASH-Speicher aufweisen oder sein. Die Kommunikationsschnittstelle ist zur kabellosen Übertragung der, insbesondere gespeicherten, Betriebsdaten und/oder der, insbesondere gespeicherten, Information ausgebildet. Insbesondere kann die Kommunikationsschnittstelle eine Bluetooth-Schnittstelle und/oder eine WLAN-Schnittstelle aufweisen oder sein. Weiter zusätzlich oder alternativ kann der Energiespeicher zur Versorgung der Erfassungs- und Auswerteeinrichtung, des Datenspeichers und/oder der Kommunikationsschnittstelle mit, insbesondere elektrischer, Energie ausgebildet sein. Im Übrigen wird bezüglich der Vorrichtung auf die einschlägige Fachliteratur verwiesen.

Das Garten-, Forst- oder Baubearbeitungsgerät und die Vorrichtung sind zu der elektrischen Verbindung miteinander mittels mindestens, insbesondere nur, einer unmittelbaren Berührung des Geräte-Kontaktelements und des Vorrichtungs-Kontaktelements voneinander ausgebildet.

Die Verstellung und/oder die Anordnung können/kann, insbesondere jeweils, manuell bzw. benutzerbetätigbar bzw. durch den Benutzer sein. Zusätzlich oder alternativ kann die Anordnung zeitlich vor der Verstellung sein. Weiter zusätzlich oder alternativ kann der Begriff "Anordnungsstellung" synonym für den Begriff "Freigabestellung" verwendet werden. Weiter zusätzlich oder alternativ können die Freigabestellung und die Verbindungsstellung verschieden sein. Weiter zusätzlich oder alternativ kann die mechanische Verbindung, insbesondere mittels des Verbindungselements in der Verbindungsstellung, das Garten-, Forst- oder Baubearbeitungsgerät und die Vorrichtung gegen Lösung voneinander sichern.

Der Begriff "Sicherung" kann synonym für den Begriff "Fixierung" verwendet werden. Das Garten-, Forst- oder Baubearbeitungssystem ist zu der Kraftbeaufschlagung des Geräte-Kontaktelements und des Vorrichtungs-Kontaktelements in unmittelbarer Berührung voneinander aufeinander, insbesondere und des Geräte-Kontaktelements und des Verbindungselements in, insbesondere unmittelbarer, Berührung voneinander aufeinander und/oder des Verbindungselements und des Vorrichtungs-Kontaktelements in, insbesondere unmittelbarer, Berührung voneinander aufeinander, ausgebildet. Weiter zusätzlich oder alternativ braucht oder kann das Garten-, Forst- oder Baubearbeitungssystem durch das Verbindungselement in der Freigabestellung nicht zu der Kraftbeaufschlagung des Geräte-Kontaktelements und des Vorrichtungs-Kontaktelements aufeinander und/oder des Geräte-Kontaktelements und des Verbindungselements aufeinander und/oder des Verbindungselements und des Vorrichtungs-Kontaktelements aufeinander und somit nicht zu der Fixierung der elektrischen Verbindung ausgebildet sein.

Das Garten-, Forst- oder Baubearbeitungsgerät weist ein Motorantriebssystem auf zum Antrieb eines Werkzeugs des Garten-, Forst- oder Baubearbeitungsgeräts. Die Betriebsdaten sind Betriebsdaten des Motorantriebssystems. Insbesondere können die Betriebsdaten eine Drehzahl und/oder eine Betriebsdauer bzw. Betriebsstunden sein, insbesondere während welcher das Motorantriebssystem aktiv sein kann, insbesondere ist. Im Übrigen wird bezüglich der Betriebsdaten auf die einschlägige Fachliteratur verwiesen.

Insbesondere braucht oder kann die Vorrichtung nicht zur Versorgung des Garten-, Forst- oder Baubearbeitungsgeräts, insbesondere des Motorantriebssystems, mit Antriebsenergie und/oder -leistung ausgebildet sein, insbesondere nicht einen Antriebsakkupack aufweisen, insbesondere sein.

Das Verbindungselement in der Verbindungstellung berührt, insbesondere unmittelbar, und/oder durchdringt das Geräte-Kontaktelement und das Vorrichtungs-Kontaktelement. Dies ermöglicht eine Einfachheit der Kraftbeaufschlagung, insbesondere und somit der Fixierung der elektrischen Verbindung, und/oder die elektrische Verbindung, insbesondere eine Sicherheit der elektrischen Verbindung, mittels des Verbindungselements und/oder eine Zentrierung, insbesondere und somit eine Sicherheit, der Kraftbeaufschlagung und/oder einen kompakten Aufbau. Insbesondere können/kann das Geräte-Kontaktelement und/oder das Vorrichtungs-Kontaktelement, insbesondere jeweils, ein Durchgangsloch aufweisen bzw. haben.

Das Garten-, Forst- oder Baubearbeitungssystem ist zu der Verstellung des Verbindungselements von der Freigabestellung in die Verbindungsstellung unabhängig von der, insbesondere nicht durch, insbesondere nur bzw. allein, die, Anordnung des Garten-, Forst- oder Baubearbeitungsgeräts, insbesondere mit dem Geräte-Kontaktelement, und der Vorrichtung, insbesondere mit dem Vorrichtungs-Kontaktelement, aneinander ausgebildet. Dies ermöglicht eine Sicherheit der Herstellung der mechanischen Verbindung und/oder, insbesondere somit, der Kraftbeaufschlagung und somit der Fixierung der elektrischen Verbindung und/oder eine einfache Lösung der mechanischen Verbindung und/oder, insbesondere somit, der Fixierung der elektrischen Verbindung, insbesondere und somit des Garten-, Forst- oder Baubearbeitungsgeräts und der Vorrichtung voneinander. Insbesondere braucht oder kann das Verbindungselement nicht ein Schnapp- und/oder Steckelement aufweisen, insbesondere sein. Zusätzlich oder alternativ braucht oder können/kann die mechanische Verbindung und/oder die elektrische Verbindung nicht eine Schnapp- und/oder Steckverbindung aufweisen, insbesondere sein.

Das Verbindungselement ist eine Schraube. Dies ermöglicht eine Einfachheit der Verstellung und/oder eine Sicherheit der Herstellung der mechanischen Verbindung und/oder, insbesondere somit, der Kraftbeaufschlagung und somit der Fixierung der elektrischen Verbindung. Insbesondere kann der Begriff "Verschraubung" synonym für den Begriff "Verstellung" verwendet werden. Zusätzlich oder alternativ kann der Begriff "Schraubverbindung" synonym für den Begriff "mechanische Verbindung" verwendet werden.

Das Verbindungselement in der Verbindungsstellung ist mindestens im Bereich des Geräte-Kontaktelements, insbesondere an dem Geräte-Kontaktelement, und im Bereich des Vorrichtungs-Kontaktelements, insbesondere an dem Vorrichtungs-Kontaktelement, elektrisch leitfähig. Dies ermöglicht die elektrische Verbindung, insbesondere eine Sicherheit der elektrischen Verbindung, mittels des Verbindungselements. Insbesondere kann der Begriff "leitend" synonym für den Begriff "leitfähig" verwendet werden.

Das Geräte-Kontaktelement weist einen Ring oder eine Gabel, insbesondere eines Kabelschuhs, auf. Insbesondere ist das Geräte-Kontaktelement ein Ring oder eine Gabel. Das Vorrichtungs-Kontaktelement weist einen Ring oder eine Gabel, insbesondere eines Kabelschuhs, auf.

Insbesondere ist das Vorrichtungs-Kontaktelement ein Ring oder eine Gabel. Dies ermöglicht die Durchdringung durch das Verbindungselement in der Verbindungstellung und/oder eine Klemmkontaktierung, insbesondere und somit die mechanische Verbindung und die elektrische Verbindung integriert und/oder mittels der Schraube. Zusätzlich oder alternativ ermöglicht dies eine Einfachheit der elektrischen Verbindung des Geräte-Kontaktelements mit einer Leitung, insbesondere einer Zünd- und/oder Stoppleitung. Insbesondere kann der Ring geschlossen oder offen sein.

Das Garten-, Forst- oder Baubearbeitungssystem ist zu der Verstellung des Verbindungselements von der Freigabestellung in die Verbindungsstellung entlang bzw. parallel zu einer Verbindungsachse ausgebildet. Zusätzlich ist das Geräte-Kontaktelement mit einer Normalen einer, insbesondere ebenen und/oder elektrisch leitfähigen, Kontaktfläche zu der elektrischen Verbindung nicht-orthogonal, insbesondere parallel, insbesondere koaxial, zu der Verbindungsachse ausgerichtet. Weiter zusätzlich ist das Vorrichtungs-Kontaktelement mit einer Normalen einer, insbesondere ebenen und/oder elektrisch leitfähigen, Kontaktfläche zu der elektrischen Verbindung nicht-orthogonal, insbesondere parallel, insbesondere koaxial, zu der Verbindungsachse ausgerichtet. Weiter zusätzlich kann das Garten-, Forst- oder Baubearbeitungssystem zu der Anordnung des Garten-, Forst- oder Baubearbeitungsgeräts, insbesondere mit dem Geräte-Kontaktelement, und der Vorrichtung, insbesondere mit dem Vorrichtungs-Kontaktelement, aneinander entlang einer zu der Verbindungsachse nicht-orthogonalen, insbesondere parallelen, insbesondere koaxialen, Anordnungsachse ausgebildet sein. Dies ermöglicht, dass die Kraftbeaufschlagung und somit die Fixierung der elektrischen Verbindung besonders gut sein kann, insbesondere ist, und/oder dass die mechanische Verbindung besonders gut sein kann, insbesondere ist. Insbesondere kann nicht-orthogonal eine Abweichung, insbesondere eine Winkelabweichung, in Bezug auf die Verbindungsachse von maximal 30 ° (Grad), insbesondere maximal 20 °, insbesondere maximal 10°, bedeuten. Zusätzlich oder alternativ können die Kontaktfläche des Geräte-Kontaktelements und die Kontaktfläche des Vorrichtungs-Kontaktelements entlang der Verbindungsachse hintereinander angeordnet sein. Weiter zusätzlich oder alternativ können das Garten-, Forst- oder Baubearbeitungsgerät und die Vorrichtung zu der elektrischen Verbindung miteinander mittels mindestens, insbesondere nur, einer, insbesondere unmittelbaren, Berührung der Kontaktfläche des Geräte-Kontaktelements und der Kontaktfläche des Vorrichtungs-Kontaktelements voneinander ausgebildet sein. Weiter zusätzlich oder alternativ können/kann die Kontaktfläche des Geräte-Kontaktelements und/oder die Kontaktfläche des Vorrichtungs-Kontaktelements, insbesondere jeweils, das Durchgangsloch aufweisen bzw. haben.

In einer Weiterbildung der Erfindung ist das Garten-, Forst- oder Baubearbeitungsgerät, insbesondere das Motorantriebssystem des Garten-, Forst- oder Baubearbeitungsgeräts, zum Betrieb, insbesondere Motorbetrieb, unabhängig von der Vorrichtung ausgebildet. Dies ermöglicht eine Auslieferung, insbesondere eine Erstauslieferung, des Garten-, Forst- oder Baubearbeitungsgeräts ohne die Vorrichtung und/oder eine Nachrüstung mit der Vorrichtung.

Insbesondere kann das Garten-, Forst- oder Baubearbeitungsgerät ein Elektromotorantriebssystem aufweisen.

Zusätzlich oder alternativ kann das Garten-, Forst- oder Baubearbeitungsgerät Verbrennungsmotorantriebssystem aufweisen. Das Verbrennungsmotorantriebssystem kann eine, insbesondere die und/oder elektrische, Zünd- und/oder Stopp-Leitung aufweisen. Das Geräte-Kontaktelement kann mit der Zünd- und/oder Stoppleitung, insbesondere unmittelbar, elektrisch verbunden sein. Die Größe kann eine Zünd-Größe der Zünd- und/oder Stopp-Leitung aufweisen. Insbesondere kann die Größe eine Zünd-Größe der Zünd- und/oder Stopp-Leitung sein. Dies ermöglicht die Charakteristik der Größe für die Betriebsdaten.

In einer Weiterbildung der Erfindung weist das Garten-, Forst- oder Baubearbeitungsgerät einen Benutzerbediengriff auf. Das Garten-, Forst- oder Baubearbeitungsgerät und die Vorrichtung sind zu der Anordnung der Vorrichtung an, insbesondere in, dem Benutzerbediengriff ausgebildet. Dies ermöglicht eine Einfachheit der Erfassung der Betriebsdaten und/oder der Größe. Insbesondere kann an, insbesondere in, dem Benutzerbediengriff eine, insbesondere die und/oder elektrische, Leitung aufweisend die Betriebsdaten und/oder die Größe, insbesondere die Zünd- und/oder Stopp-Leitung, angeordnet sein. Zusätzlich oder alternativ kann an, insbesondere in, dem Benutzerbediengriff ein benutzerbetätigbares Bedienelement zur Bedienung des Garten-, Forst- oder Baubearbeitungsgeräts, insbesondere des Motorantriebssystems, insbesondere mittels der Leitung, angeordnet sein. Weiter zusätzlich oder alternativ kann der Benutzerbediengriff ein Handgriff sein.

In einer Weiterbildung der Erfindung ist das Garten-, Forst- oder Baubearbeitungssystem zu einer benutzerbetätigbaren Verstellung des Verbindungselements von der Verbindungsstellung in die Freigabestellung ausgebildet. Dies ermöglicht eine, insbesondere zerstörungsfreie, Lösung der mechanischen Verbindung und/oder, insbesondere somit, der Fixierung der elektrischen Verbindung, insbesondere und somit des Garten-, Forst- oder Baubearbeitungsgeräts und der Vorrichtung voneinander. Insbesondere kann die Lösung zeitlich nach der Verstellung sein.

In einer Weiterbildung der Erfindung weist das Garten-, Forst- oder Baubearbeitungsgerät ein Geräte-Gehäuse auf. Die Vorrichtung weist ein Vorrichtungs-Gehäuse auf. Das Geräte-Kontaktelement ist in Bezug auf das Geräte-Gehäuse derart, insbesondere formschlüssig, festgehalten, insbesondere in das Geräte-Gehäuse derart eingeschnappt oder eingeklemmt, und das Vorrichtungs-Kontaktelement ist in Bezug auf das Vorrichtungs-Gehäuse derart festgehalten, dass durch, insbesondere nur bzw. allein, insbesondere entweder, die Anordnung des Garten-, Forst- oder Baubearbeitungsgeräts, insbesondere mit dem Geräte-Kontaktelement, und der Vorrichtung, insbesondere mit dem Vorrichtungs-Kontaktelement, aneinander oder die Verstellung des Verbindungselements von der Freigabestellung in die Verbindungsstellung das Geräte-Kontaktelement und das Vorrichtungs-Kontaktelement, insbesondere unmittelbar, aneinander bzw. in, insbesondere unmittelbarer, Berührung voneinander angeordnet sind. Dies ermöglicht eine Herstellung der elektrischen Verbindung und die Anordnung oder die Verstellung, insbesondere integriert und/oder gleichzeitig bzw. in einem selben bzw. gemeinsamen Schritt. Somit ermöglicht dies einen Synergieeffekt. Insbesondere braucht oder kann nicht ein weiterer Schritt zur Herstellung der elektrischen Verbindung vorgesehen bzw. erforderlich sein. Zusätzlich oder alternativ brauchen oder können ohne die bzw. zeitlich vor der Anordnung oder der Verstellung das Geräte-Kontaktelement und das Vorrichtungs-Kontaktelement nicht aneinander angeordnet sein.

In einer Weiterbildung der Erfindung weist das Garten-, Forst- oder Baubearbeitungsgerät ein, insbesondere das, Geräte-Gehäuse auf. Das Geräte-Gehäuse hat bzw. weist eine Vorrichtungs-Aufnahme auf. Das Garten-, Forst- oder Baubearbeitungsgerät und die Vorrichtung sind zu der Anordnung aufweisend eine, insbesondere vollständige, Aufnahme der Vorrichtung, insbesondere eines, insbesondere des, Vorrichtungs-Gehäuses, in der Vorrichtungs-Aufnahme ausgebildet, insbesondere derart, dass eine Außenfläche des Geräte-Gehäuses und eine Außenfläche eines, insbesondere des, Vorrichtungs-Gehäuses der Vorrichtung bündig sind. Dies ermöglicht eine integrierte Anordnung des Garten-, Forst- oder Baubearbeitungsgeräts und der Vorrichtung aneinander und/oder eine, insbesondere formschlüssige, Sicherung der, insbesondere aufgenommenen, Vorrichtung in einer zu einer, insbesondere der, Anordnungsachse orthogonalen bzw. radialen Richtung durch das Garten-, Forst- oder Baubearbeitungsgerät, insbesondere gegen Lösung voneinander. Insbesondere kann die Vorrichtungs-Aufnahme eine Vorrichtungs-Aufnahmetasche sein. Zusätzlich oder alternativ kann die Formulierung "auf gleicher Höhe abschließend" oder "auf gleicher Ebener" oder "eine Ebene bildend" oder der Begriff "glatt" synonym für den Begriff "bündig" verwendet werden.

Das erfindungsgemäße motorangetriebene handgeführte Garten-, Forst- oder Baubearbeitungsgerät weist mindestens ein, insbesondere das, Geräte-Kontaktelement auf. Des Weiteren ist das Garten-, Forst- oder Baubearbeitungsgerät für ein, insbesondere das, Garten-, Forst- oder Baubearbeitungssystem wie vorhergehend genannt ausgebildet. Das mindestens eine Geräte-Kontaktelement wirkt mit dem mindestens einen Vorrichtungs-Kontaktelement der Vorrichtung und dem mechanischen Verbindungselement des Garten-, Forst- oder Baubearbeitungssystems zusammen. Insbesondere kann das Garten-, Forst- oder Baubearbeitungsgerät mindestens teilweise oder vollständig wie vorhergehend genannt, insbesondere ausgebildet, sein.

Die erfindungsgemäße Vorrichtung weist mindestens ein, insbesondere das, Vorrichtungs-Kontaktelement auf. Des Weiteren ist die Vorrichtung für ein, insbesondere das, Garten-, Forst- oder Baubearbeitungssystem wie vorhergehend genannt ausgebildet. Das mindestens eine Vorrichtungs-Kontaktelement wirkt mit dem mindestens einen Geräte-Kontaktelement des Garten-, Forst- oder Baubearbeitungsgeräts und dem mechanischen Verbindungselement des Garten-, Forst- oder Baubearbeitungssystems zusammen. Die Vorrichtung ist zur Erfassung von, insbesondere den, Betriebsdaten des Motorantriebssystems des Garten-, Forst- oder Baubearbeitungsgeräts und/oder einer, insbesondere der, Größe charakteristisch für Betriebsdaten des Motorantriebssystems mittels der elektrischen Verbindung und zur kabellosen Übertragung der Betriebsdaten und/oder einer, insbesondere der, Information basierend auf den Betriebsdaten und/oder der Größe ausgebildet. Insbesondere kann die Vorrichtung mindestens teilweise oder vollständig wie vorhergehend genannt, insbesondere ausgebildet, sein.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgend anhand der Figuren erläutert sind. Dabei zeigen:
- Fig. 1: eine Perspektivansicht eines Ausschnitts eines erfindungsgemäßen Garten-, Forst- oder Baubearbeitungssystems aufweisend ein erfindungsgemäßes motorangetriebenes Garten-, Forst- oder Baubearbeitungsgerät und eine erfindungsgemäße Vorrichtung zeitlich vor einer Anordnung des Garten-, Forst- oder Baubearbeitungsgeräts und der Vorrichtung aneinander,
- Fig. 2: eine Schnittansicht des Garten-, Forst- oder Baubearbeitungsgeräts der Fig. 1,
- Fig. 3: eine weitere Schnittansicht des Garten-, Forst- oder Baubearbeitungsgeräts der Fig. 1,
- Fig. 4: eine weitere Perspektivansicht des Ausschnitts der Garten-, Forst- oder Baubearbeitungssystems der Fig. 1 zeitlich nach der Anordnung des Garten-, Forst- oder Baubearbeitungsgeräts und der Vorrichtung aneinander und zeitlich nach einer Verstellung eines Verbindungselements von einer Freigabestellung zu einer Freigabe der Anordnung in eine Verbindungsstellung zu einer mechanischen Verbindung des Garten-, Forst- oder Baubearbeitungsgeräts und der Vorrichtung miteinander,
- Fig. 5: eine Schnittansicht des Garten-, Forst- oder Baubearbeitungssystems der Fig. 4,
- Fig. 6: eine weitere Schnittansicht des Garten-, Forst- oder Baubearbeitungssystems der Fig. 4, und
- Fig. 7: eine weitere Perspektivansicht des Garten-, Forst- oder Baubearbeitungssystems der Fig. 4.

### DETAILLIERTE BESCHREIBUNG DER AUSFÜHRUNGSBEISPIELE

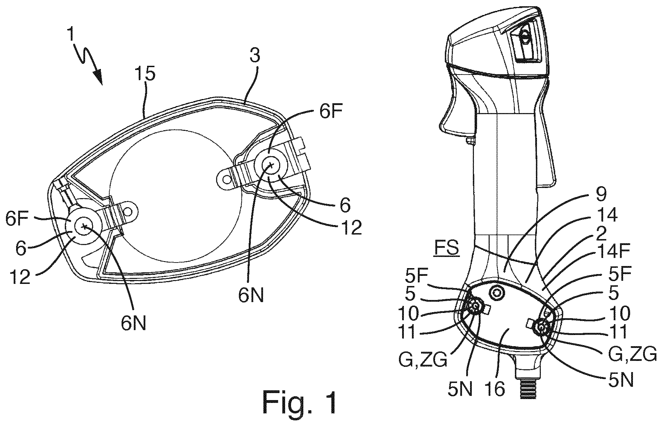

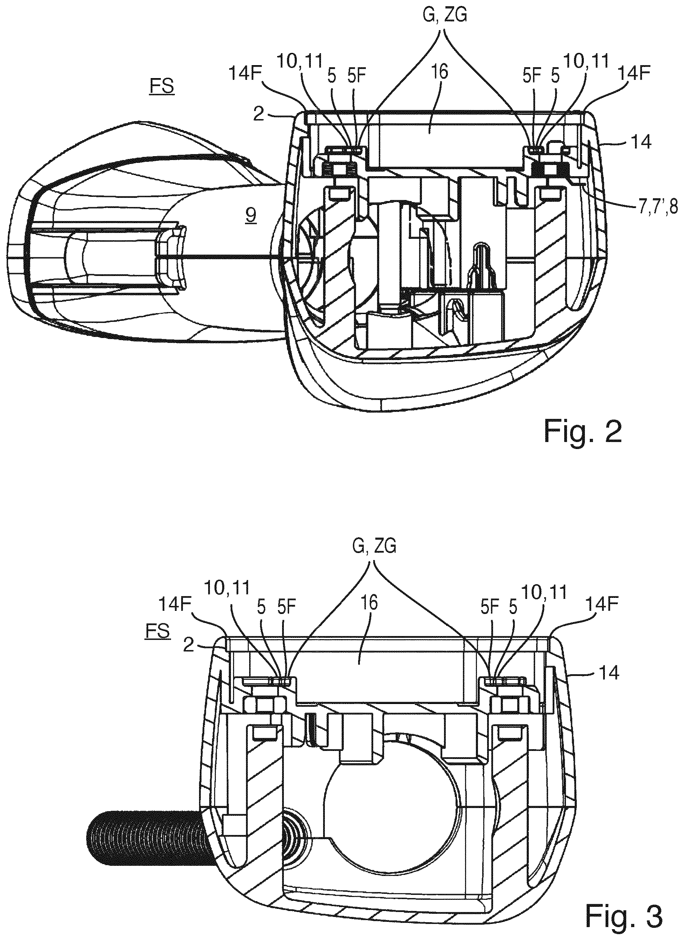

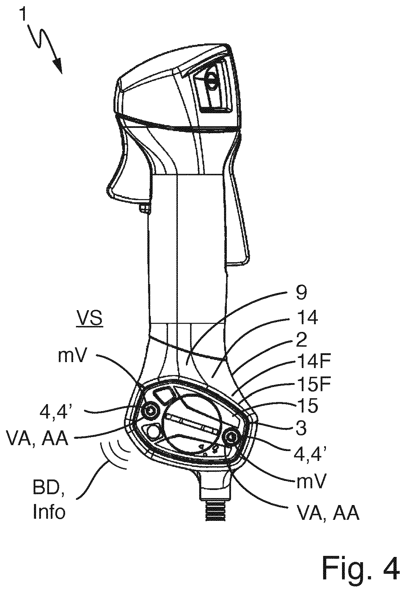

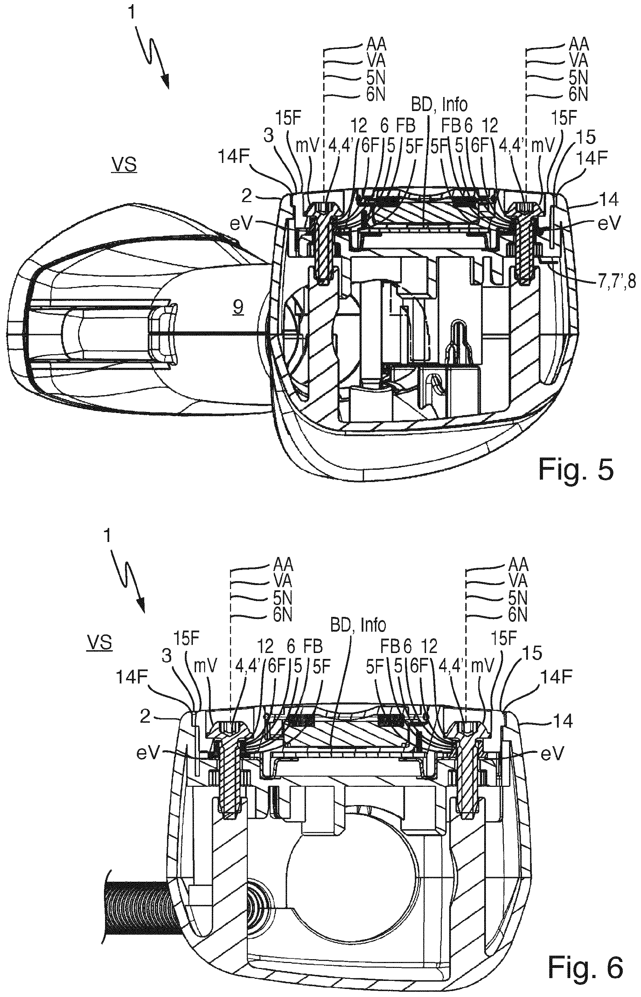

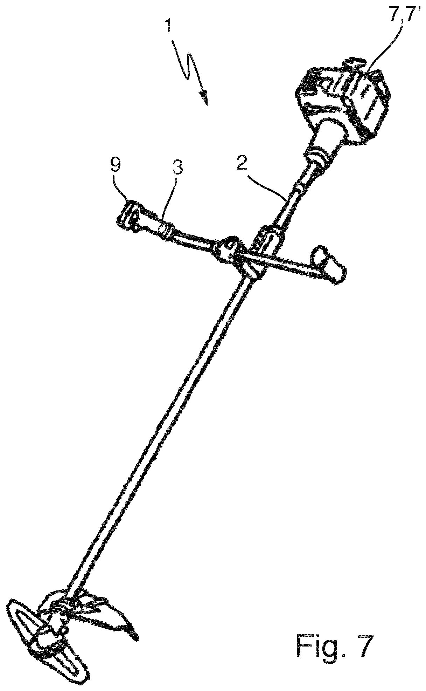

Fig. 1 und 4 bis 7 zeigen ein erfindungsgemäßes Garten-, Forst- oder Baubearbeitungssystem 1. Das Garten-, Forst- oder Baubearbeitungssystem 1 weist ein erfindungsgemäßes motorangetriebenes Garten-, Forst- oder Baubearbeitungsgerät 2, eine erfindungsgemäße Vorrichtung 3 und mindestens ein mechanisches Verbindungselement 4, in dem gezeigten Ausführungsbeispiel zwei mechanische Verbindungselemente 4, auf. Die Vorrichtung 3 ist zur Erfassung von Betriebsdaten des Garten-, Forst- oder Baubearbeitungsgeräts 2 und/oder einer Größe G charakteristisch für Betriebsdaten BD mittels mindestens einer elektrischen Verbindung eV, in dem gezeigten Ausführungsbeispiel zwei elektrischen Verbindungen eV, ausgebildet, insbesondere erfasst. Des Weiteren ist die Vorrichtung 3 zur kabellosen Übertragung der Betriebsdaten BD und/oder einer Information Info basierend auf den Betriebsdaten BD und/oder der Größe G ausgebildet, insbesondere überträgt. Außerdem weist die Vorrichtung 3 mindestens ein Vorrichtungs-Kontaktelement 6, in dem gezeigten Ausführungsbeispiel zwei Vorrichtungs-Kontaktelemente 6, auf. Das Garten-, Forst- oder Baubearbeitungsgerät 2 weist mindestens ein Geräte-Kontaktelement 5, in dem gezeigten Ausführungsbeispiel zwei Geräte-Kontaktelemente 5, auf. Weiter sind das Garten-, Forst- oder Baubearbeitungsgerät 2 und die Vorrichtung 3 zu der elektrischen Verbindung eV miteinander mittels mindestens des Geräte-Kontaktelements 5 und des Vorrichtungs-Kontaktelements 6 und zu mindestens einer mechanischen Verbindung mV, in dem gezeigten Ausführungsbeispiel zwei mechanischen Verbindung mV, miteinander mittels des Verbindungselements 4 ausgebildet, insbesondere elektrisch und mechanisch verbunden. Insbesondere verbinden das Geräte-Kontaktelement 5 und das Vorrichtungs-Kontaktelement 6 das Garten-, Forst- oder Baubearbeitungsgerät 2 und die Vorrichtung 3 miteinander elektrisch. Zusätzlich verbindet das Verbindungselement 4 das Garten-, Forst- oder Baubearbeitungsgerät 2 und die Vorrichtung 3 miteinander mechanisch. Das Garten-, Forst- oder Baubearbeitungssystem 1 ist zu einer Verstellung des Verbindungselements 4 von einer in Fig. 1 bis 3 gezeigten Freigabestellung FS zu einer Freigabe einer Anordnung des Garten-, Forst- oder Baubearbeitungsgeräts 2 mit dem Geräte-Kontaktelement 5 und der Vorrichtung 3 mit dem Vorrichtungs-Kontaktelement 6 aneinander in eine in Fig. 4 bis 6 gezeigte Verbindungsstellung VS zu der mechanischen Verbindung mV ausgebildet. Insbesondere sind das Garten-, Forst- oder Baubearbeitungsgerät 2 mit dem Geräte-Kontaktelement 5 und die Vorrichtung 3 mit dem Vorrichtungs-Kontaktelement 6 aneinander angeordnet und das Verbindungselement 4 ist, insbesondere von der Freigabestellung FS, in die Verbindungsstellung VS verstellt. Zudem ist das Garten-, Forst- oder Baubearbeitungssystem 1 durch die Verstellung des Verbindungselements 4 von der Freigabestellung FS in die Verbindungsstellung VS zu einer Fixierung der elektrischen Verbindung eV zu einer Kraftbeaufschlagung FB des Geräte-Kontaktelements 5 und des Vorrichtungs-Kontaktelements 6 aufeinander, insbesondere und des Geräte-Kontaktelements und des Verbindungselements aufeinander und/oder des Verbindungselements und des Vorrichtungs-Kontaktelements aufeinander, ausgebildet. Insbesondere kraftbeaufschlagt das Verbindungselement 4 in der Verbindungsstellung VS das Geräte-Kontaktelement 5 und das Vorrichtungs-Kontaktelement 6 aufeinander und fixiert somit die elektrische Verbindung eV.

Im Detail ist das Garten-, Forst- oder Baubearbeitungsgerät 2, insbesondere ein Motorantriebssystem 7 des Garten-, Forst- oder Baubearbeitungsgeräts 2, zum Betrieb unabhängig von der Vorrichtung 3 ausgebildet.

Des Weiteren kann das Garten-, Forst- oder Baubearbeitungsgerät 2 ein Verbrennungsmotorantriebssystem 7' aufweisen. Das Verbrennungsmotorantriebssystem 7' kann eine Zünd- und/oder Stopp-Leitung 8 aufweisen. Das Geräte-Kontaktelement 5 kann mit der Zünd- und/oder Stoppleitung 8 elektrisch verbunden sein. Die Größe G kann eine Zünd-Größe ZG der Zünd- und/oder Stopp-Leitung 8 aufweisen. Insbesondere kann die Größe G eine Zünd-Größe ZG der Zünd- und/oder Stopp-Leitung 8 sein.

Außerdem weist das Garten-, Forst- oder Baubearbeitungsgerät 2 einen Benutzerbediengriff 9 auf. Das Garten-, Forst- oder Baubearbeitungsgerät 2 und die Vorrichtung 3 sind zu der Anordnung der Vorrichtung 3 an, insbesondere in, dem Benutzerbediengriff 9 ausgebildet. Insbesondere ist die Vorrichtung 3 an, insbesondere in, dem Benutzerbediengriff 9 angeordnet.

Weiter ist das Garten-, Forst- oder Baubearbeitungssystem 1 zu der Verstellung des Verbindungselements 4 von der Freigabestellung FS in die Verbindungsstellung VS unabhängig von der Anordnung des Garten-, Forst- oder Baubearbeitungsgeräts 2 und der Vorrichtung 3 aneinander ausgebildet.

Zudem ist das Garten-, Forst- oder Baubearbeitungssystem 1 zu einer Verstellung des Verbindungselements 4 von der Verbindungsstellung VS in die Freigabestellung FS ausgebildet.

Des Weiteren ist das Verbindungselement 4 eine Schraube 4'.

In dem gezeigten Ausführungsbeispiel hat bzw. weist das Garten-, Forst- oder Baubearbeitungsgerät 2 ein Gewinde für die Schraube 4' auf. Zusätzlich weist die Vorrichtung 3 ein Durchgangsloch für die Schraube 4' auf. Weiter zusätzlich weist die Vorrichtung 3 eine, insbesondere versenkte, Anlagefläche für einen, insbesondere dann versenkten, Kopf der Schraube 4' auf. In alternativen Ausführungsbeispielen kann die Vorrichtung ein Gewinde für die Schraube aufweisen. Zusätzlich kann das Garten-, Forst- oder Baubearbeitungsgerät ein Durchgangsloch für die Schraube aufweisen. Weiter zusätzlich kann das Garten-, Forst- oder Baubearbeitungsgerät eine, insbesondere versenkte, Anlagefläche für einen, insbesondere dann versenkten, Kopf der Schraube aufweisen.

Außerdem berührt und/oder durchdringt in dem gezeigten Ausführungsbeispiel das Verbindungselement 4 in der Verbindungstellung VS das Geräte-Kontaktelement 5, in dem gezeigten Ausführungsbeispiel ein Durchgangsloch des Geräte-Kontaktelements 5, und das Vorrichtungs-Kontaktelement 6, in dem gezeigten Ausführungsbeispiel ein Durchgangsloch des Vorrichtungs-Kontaktelements 6.

Weiter ist das Verbindungselement 4 in der Verbindungsstellung VS mindestens im Bereich des Geräte-Kontaktelements 5 und im Bereich des Vorrichtungs-Kontaktelements 6 elektrisch leitfähig.

Zudem weist das Geräte-Kontaktelement 5 einen Ring 10 oder eine Gabel, in dem gezeigten Ausführungsbeispiel eines Kabelschuhs 11, auf. Insbesondere ist das Geräte-Kontaktelement 5 ein Ring 10 oder eine Gabel. Zusätzlich weist das Vorrichtungs-Kontaktelement 6 einen Ring 12 oder eine Gabel, in alternativen Ausführungsbeispielen eines Kabelschuhs, auf. Insbesondere ist das Vorrichtungs-Kontaktelement 6 ein Ring 12 oder eine Gabel.

Des Weiteren ist das Garten-, Forst- oder Baubearbeitungssystem 1 zu der Verstellung des Verbindungselements 4 von der Freigabestellung FS in die Verbindungsstellung VS entlang einer Verbindungsachse VA ausgebildet. Zusätzlich ist das Geräte-Kontaktelement 5 mit einer Normalen 5N einer Kontaktfläche 5F zu der elektrischen Verbindung eV nicht-orthogonal, insbesondere parallel, insbesondere koaxial, zu der Verbindungsachse VA ausgerichtet. Weiter zusätzlich ist das Vorrichtungs-Kontaktelement 6 mit einer Normalen 6N einer Kontaktfläche 6F zu der elektrischen Verbindung eV nicht-orthogonal, insbesondere parallel, insbesondere koaxial, zu der Verbindungsachse VA ausgerichtet. Weiter zusätzlich ist das Garten-, Forst- oder Baubearbeitungssystem 1 zu der Anordnung des Garten-, Forst- oder Baubearbeitungsgeräts 2 und der Vorrichtung 3 aneinander entlang einer zu der Verbindungsachse VA nicht-orthogonalen, insbesondere parallelen, insbesondere koaxialen, Anordnungsachse AA ausgebildet.

Außerdem weist das Garten-, Forst- oder Baubearbeitungsgerät 2 ein Geräte-Gehäuse 14 auf. Die Vorrichtung 3 weist ein Vorrichtungs-Gehäuse 15 auf. Das Geräte-Kontaktelement 5 ist in Bezug auf das Geräte-Gehäuse 14 derart, insbesondere formschlüssig, festgehalten, insbesondere in das Geräte-Gehäuse 14 derart eingeschnappt oder eingeklemmt, und das Vorrichtungs-Kontaktelement 6 ist in Bezug auf das Vorrichtungs-Gehäuse 15 derart festgehalten, dass durch, in alternativen Ausführungsbeispielen die Anordnung des Garten-, Forst- oder Baubearbeitungsgeräts und der Vorrichtung aneinander oder, in dem gezeigten Ausführungsbeispiel die Verstellung des Verbindungselements 4 von der Freigabestellung FS in die Verbindungsstellung VS das Geräte-Kontaktelement 5 und das Vorrichtungs-Kontaktelement 6 aneinander angeordnet sind.

Weiter weist das Garten-, Forst- oder Baubearbeitungsgerät 2 das Geräte-Gehäuse 14 auf. Das Geräte-Gehäuse 14 weist eine Vorrichtungs-Aufnahme 16 auf. Das Garten-, Forst- oder Baubearbeitungsgerät 2 und die Vorrichtung 3 sind zu der Anordnung aufweisend eine Aufnahme der Vorrichtung 3, insbesondere des Vorrichtungs-Gehäuses 15, in der Vorrichtungs-Aufnahme 16 ausgebildet, insbesondere derart, dass eine Außenfläche 14F des Geräte-Gehäuses 14 und eine Außenfläche 15F eines Vorrichtungs-Gehäuses 15 der Vorrichtung 3 bündig sind. Insbesondere ist die Vorrichtung 3 in der Vorrichtungs-Aufnahme 16 aufgenommen.

Wie die gezeigten und zuvor beschriebenen Ausführungsbeispiele deutlich machen, stellt die Erfindung ein vorteilhaftes Garten-, Forst- oder Baubearbeitungssystem, ein vorteilhaftes motorangetriebenes Garten-, Forst- oder Baubearbeitungsgerät für ein solches Garten-, Forst- oder Baubearbeitungssystem und eine vorteilhafte Vorrichtung für ein solches Garten-, Forst- oder Baubearbeitungssystem bereit, das und/oder die jeweils verbesserte Eigenschaften aufweist.

## Patentansprüche

1. Garten-, Forst- oder Baubearbeitungssystem (1),
- wobei das Garten-, Forst- oder Baubearbeitungssystem (1) ein motorangetriebenes handgeführtes Garten-, Forst- oder Baubearbeitungsgerät (2), eine Vorrichtung (3) und mindestens ein mechanisches Verbindungselement (4) aufweist,
- wobei das Garten-, Forst- oder Baubearbeitungsgerät (2) ein Motorantriebssystem (7) aufweist zum Antrieb eines Werkzeugs des Garten-, Forst- oder Baubearbeitungsgeräts (2),
- wobei die Vorrichtung (3) zur Erfassung von Betriebsdaten (BD) des Motorantriebssystems (7) des Garten-, Forst- oder Baubearbeitungsgeräts (2) und/oder einer Größe (G) charakteristisch für Betriebsdaten (BD) des Motorantriebssystems (7) mittels mindestens einer elektrischen Verbindung (eV) und zur kabellosen Übertragung der Betriebsdaten (BD) und/oder einer Information (Info) basierend auf den Betriebsdaten (BD) und/oder der Größe (G) ausgebildet ist,
- wobei die Vorrichtung (3) mindestens ein Vorrichtungs-Kontaktelement (6) aufweist,
- wobei das Garten-, Forst- oder Baubearbeitungsgerät (2) mindestens ein Geräte-Kontaktelement (5) aufweist,
- wobei das Garten-, Forst- oder Baubearbeitungsgerät (2) und die Vorrichtung (3) zu der elektrischen Verbindung (eV) miteinander mittels mindestens des Geräte-Kontaktelements (5) und des Vorrichtungs-Kontaktelements (6) und zu mindestens einer mechanischen Verbindung (mV) miteinander mittels des Verbindungselements (4) ausgebildet sind, und
- wobei das Garten-, Forst- oder Baubearbeitungssystem (1) zu einer Verstellung des Verbindungselements (4) von einer Freigabestellung (FS) zu einer Freigabe einer Anordnung des Garten-, Forst- oder Baubearbeitungsgeräts (2) mit dem Geräte-Kontaktelement (5) und der Vorrichtung (3) mit dem Vorrichtungs-Kontaktelement (6) aneinander in eine Verbindungsstellung (VS) zu der mechanischen Verbindung (mV) ausgebildet ist,
- wobei das Garten-, Forst- oder Baubearbeitungssystem (1) durch die Verstellung des Verbindungselements (4) von der Freigabestellung (FS) in die Verbindungsstellung (VS) zu einer Fixierung der elektrischen Verbindung (eV) zu einer Kraftbeaufschlagung (FB) des Geräte-Kontaktelements (5) und des Vorrichtungs-Kontaktelements (6) aufeinander ausgebildet ist,
- wobei das Verbindungselement (4) in der Verbindungstellung (VS) das Geräte-Kontaktelement (5) und das Vorrichtungs-Kontaktelement (6) berührt und/oder durchdringt,
- wobei das Garten-, Forst- oder Baubearbeitungssystem (1) zu der Verstellung des Verbindungselements (4) von der Freigabestellung (FS) in die Verbindungsstellung (VS) unabhängig von der Anordnung des Garten-, Forst- oder Baubearbeitungsgeräts (2) und der Vorrichtung (3) aneinander ausgebildet ist,
- wobei das Verbindungselement (4) in der Verbindungsstellung (VS) mindestens im Bereich des Geräte-Kontaktelements (5) und im Bereich des Vorrichtungs-Kontaktelements (6) elektrisch leitfähig ist,
- wobei das Garten-, Forst- oder Baubearbeitungssystem (1) zu der Verstellung des Verbindungselements (4) von der Freigabestellung (FS) in die Verbindungsstellung (VS) entlang einer Verbindungsachse (VA) ausgebildet ist, und wobei das Geräte-Kontaktelement (5) mit einer Normalen (5N) einer Kontaktfläche (5F) zu der elektrischen Verbindung (eV) nicht-orthogonal, insbesondere parallel, insbesondere koaxial, zu der Verbindungsachse (VA) ausgerichtet ist, und wobei das Vorrichtungs-Kontaktelement (6) mit einer Normalen (6N) einer Kontaktfläche (6F) zu der elektrischen Verbindung (eV) nicht-orthogonal, insbesondere parallel, insbesondere koaxial, zu der Verbindungsachse (VA) ausgerichtet ist,
- wobei das Garten-, Forst- oder Baubearbeitungsgerät (2) eine Säge, insbesondere eine Kettensäge, ein Hoch-Entaster, eine Heckenschere, ein Heckenschneider, ein Gehölzschneider, eine Astschere, ein Blasgerät, ein Laubbläser, ein Sauggerät, ein Laubsauger, ein Reinigungsgerät, ein Hochdruckreiniger, eine Kehrwalze, eine Kehrbürste, ein Vertikutierer, ein Rasenmäher, ein Freischneider oder ein Trennschleifer ist,
- wobei die Vorrichtung (3) eine elektrische Erfassungs- und Auswerteeinrichtung und eine elektrische Kommunikationsschnittstelle aufweist, wobei die Erfassungs- und Auswerteeinrichtung zur Erfassung der Betriebsdaten (BD) und/oder der Größe (G) ausgebildet ist, wobei die Erfassungs- und Auswerteeinrichtung zur Auswertung der erfassten Größe (G) zur Ermittlung der Betriebsdaten (BD) und/oder der erfassten und/oder ermittelten Betriebsdaten (BD) zur Ermittlung der Information (Info) ausgebildet ist, und wobei die Kommunikationsschnittstelle zur kabellosen Übertragung der Betriebsdaten (BD) und/oder der Information (Info) ausgebildet ist,
- wobei das Garten-, Forst- oder Baubearbeitungsgerät (2) und die Vorrichtung (3) zu der elektrischen Verbindung (eV) miteinander mittels mindestens einer unmittelbaren Berührung des Geräte-Kontaktelements (5) und des Vorrichtungs-Kontaktelements (6) voneinander ausgebildet sind, und
- wobei das Garten-, Forst- oder Baubearbeitungssystem (1) zu der Kraftbeaufschlagung (FB) des Geräte-Kontaktelements (5) und des Vorrichtungs-Kontaktelements (6) in unmittelbarer Berührung voneinander aufeinander ausgebildet sind,
- **dadurch gekennzeichnet, dass** das Verbindungselement (4) eine Schraube (4') ist, und das Geräte-Kontaktelement (5) einen Ring (10) oder eine Gabel, insbesondere eines Kabelschuhs (11), aufweist, insbesondere ein Ring (10) oder eine Gabel ist, wobei das Vorrichtungs-Kontaktelement (6) einen Ring (12) oder eine Gabel, insbesondere eines Kabelschuhs, aufweist, insbesondere ein Ring (12) oder eine Gabel ist.

2. Garten-, Forst- oder Baubearbeitungssystem (1) nach dem vorhergehenden Anspruch,
- wobei das Garten-, Forst- oder Baubearbeitungsgerät (2), insbesondere das Motorantriebssystem (7) des Garten-, Forst- oder Baubearbeitungsgeräts (2), zum Betrieb unabhängig von der Vorrichtung (3) ausgebildet ist.

3. Garten-, Forst- oder Baubearbeitungssystem (1) nach einem der vorhergehenden Ansprüche,
- wobei das Garten-, Forst- oder Baubearbeitungsgerät (2) einen Benutzerbediengriff (9) aufweist, und
- wobei das Garten-, Forst- oder Baubearbeitungsgerät (2) und die Vorrichtung (3) zu der Anordnung der Vorrichtung (3) an, insbesondere in, dem Benutzerbediengriff (9) ausgebildet sind.

4. Garten-, Forst- oder Baubearbeitungssystem (1) nach einem der vorhergehenden Ansprüche,
- wobei das Garten-, Forst- oder Baubearbeitungssystem (1) zu einer benutzerbetätigbaren Verstellung des Verbindungselements (4) von der Verbindungsstellung (VS) in die Freigabestellung (FS) ausgebildet ist.

5. Garten-, Forst- oder Baubearbeitungssystem (1) nach einem der vorhergehenden Ansprüche,
- wobei das Garten-, Forst- oder Baubearbeitungssystem (1) zu der Anordnung des Garten-, Forst- oder Baubearbeitungsgeräts (2) und der Vorrichtung (3) aneinander entlang einer zu der Verbindungsachse (VA) nicht-orthogonalen, insbesondere parallelen, insbesondere koaxialen, Anordnungsachse (AA) ausgebildet ist.

6. Garten-, Forst- oder Baubearbeitungssystem (1) nach einem der vorhergehenden Ansprüche,
- wobei das Garten-, Forst- oder Baubearbeitungsgerät (2) ein Geräte-Gehäuse (14) aufweist,
- wobei die Vorrichtung (3) ein Vorrichtungs-Gehäuse (15) aufweist, und
- wobei das Geräte-Kontaktelement (5) in Bezug auf das Geräte-Gehäuse (14) derart, insbesondere formschlüssig, festgehalten ist, insbesondere in das Geräte-Gehäuse (14) derart eingeschnappt oder eingeklemmt ist, und wobei das Vorrichtungs-Kontaktelement (6) in Bezug auf das Vorrichtungs-Gehäuse (15) derart festgehalten ist, dass durch die Anordnung des Garten-, Forst- oder Baubearbeitungsgeräts und der Vorrichtung aneinander oder die Verstellung des Verbindungselements (4) von der Freigabestellung (FS) in die Verbindungsstellung (VS) das Geräte-Kontaktelement (5) und das Vorrichtungs-Kontaktelement (6) aneinander angeordnet sind.

7. Garten-, Forst- oder Baubearbeitungssystem (1) nach einem der vorhergehenden Ansprüche,
- wobei das Garten-, Forst- oder Baubearbeitungsgerät (2) ein Geräte-Gehäuse (14) aufweist, wobei das Geräte-Gehäuse (14) eine Vorrichtungs-Aufnahme (16) aufweist, und
- wobei das Garten-, Forst- oder Baubearbeitungsgerät (2) und die Vorrichtung (3) zu der Anordnung aufweisend eine Aufnahme der Vorrichtung (3) in der Vorrichtungs-Aufnahme (16) ausgebildet sind, insbesondere derart, dass eine Außenfläche (14F) des Geräte-Gehäuses (14) und eine Außenfläche (15F) eines Vorrichtungs-Gehäuses (15) der Vorrichtung (3) bündig sind.

8. Motorangetriebenes handgeführtes Garten-, Forst- oder Baubearbeitungsgerät (2),
- wobei das Garten-, Forst- oder Baubearbeitungsgerät (2) mindestens ein Geräte-Kontaktelement (5) aufweist,
- wobei das Garten-, Forst- oder Baubearbeitungsgerät (2) für ein Garten-, Forst- oder Baubearbeitungssystem (1) nach einem der vorhergehenden Ansprüche ausgebildet ist, wobei das Garten-, Forst- oder Baubearbeitungsgerät (2) die Merkmale des Garten-, Forst- oder Baubearbeitungsgeräts (2) des Garten-, Forst- oder Baubearbeitungssystems (1) nach einem der vorhergehenden Ansprüche umfasst, und
- wobei das mindestens eine Geräte-Kontaktelement (5) mit dem mindestens einen Vorrichtungs-Kontaktelement (6) der Vorrichtung (3) und dem mechanischen Verbindungselement (4) des Garten-, Forst- oder Baubearbeitungssystems (1) zusammenwirkt.

9. Vorrichtung (3),
- wobei die Vorrichtung (3) mindestens ein Vorrichtungs-Kontaktelement (6) aufweist,
- wobei die Vorrichtung (3) für ein Garten-, Forst- oder Baubearbeitungssystem (1) nach einem der Ansprüche 1 bis 7 ausgebildet ist, wobei die Vorrichtung (3) die Merkmale der Vorrichtung (3) des Garten-, Forst- oder Baubearbeitungssystems (1) nach einem der Ansprüche 1 bis 7 umfasst,
- wobei das mindestens eine Vorrichtungs-Kontaktelement (6) mit dem mindestens einen Geräte-Kontaktelement (5) des Garten-, Forst- oder Baubearbeitungsgeräts (2) und dem mechanischen Verbindungselement (4) des Garten-, Forst- oder Baubearbeitungssystems (1) zusammenwirkt, und
- wobei die Vorrichtung (3) zur Erfassung von Betriebsdaten (BD) des Motorantriebssystems (7) des Garten-, Forst- oder Baubearbeitungsgeräts (2) und/oder einer Größe (G) charakteristisch für Betriebsdaten (BD) des Motorantriebssystems (7) mittels der elektrischen Verbindung (eV) und zur kabellosen Übertragung der Betriebsdaten (BD) und/oder einer Information (Info) basierend auf den Betriebsdaten (BD) und/oder der Größe (G) ausgebildet ist.

## Claims

1. Gardening, forestry or construction work system (1),
- wherein the gardening, forestry or construction work system (1) has a motor-driven hand-guided gardening, forestry or construction work appliance (2), a device (3) and at least one mechanical connecting element (4),
- wherein the gardening, forestry or construction work appliance (2) has a motor drive system (7) for driving a tool of the gardening, forestry or construction work appliance (2),
- wherein the device (3) is designed for recording operating data (BD) of the motor drive system (7) of the gardening, forestry or construction work appliance (2) and/or a variable (G) characteristic of operating data (BD) of the motor drive system (7) by means of at least one electrical connection (eV) and for wirelessly transmitting the operating data (BD) and/or information (Info) based on the operating data (BD) and/or the variable (G),
- wherein the device (3) has at least one device contact element (6),
- wherein the gardening, forestry or construction work appliance (2) has at least one appliance contact element (5),
- wherein the gardening, forestry or construction work appliance (2) and the device (3) are designed for the electrical connection (eV) with each other by means of at least the appliance contact element (5) and the device contact element (6) and for at least one mechanical connection (mV) with each other by means of the connecting element (4), and
- wherein the gardening, forestry or construction work system (1) is designed for an adjusting the connecting element (4) from a release position (FS) for releasing an arrangement of the gardening, forestry or construction work appliance (2) with the appliance contact element (5) and the device (3) with the device contact element (6) at each other to a connecting position (VS) for the mechanical connection (mV),
- wherein the gardening, forestry or construction work system (1) is designed by the adjusting the connecting element (4) from the release position (FS) to the connecting position (VS) for fixing the electrical connection (eV) for force application (FB) of the appliance contact element (5) and the device contact element (6) on each other,
- wherein the connecting element (4) in the connecting position (VS) touches and/or passes through the appliance contact element (5) and the device contact element (6),
- wherein the gardening, forestry or construction work system (1) is designed for the adjusting the connecting element (4) from the release position (FS) to the connecting position (VS) independently of the arrangement of the gardening, forestry or construction work appliance (2) and the device (3) at each other,
- wherein the connecting element (4) in the connecting position (VS) is electrically conductive at least in the region of the appliance contact element (5) and in the region of the device contact element (6),
- wherein the gardening, forestry or construction work system (1) is designed for the adjusting the connecting element (4) from the release position (FS) to the connecting position (VS) along a connecting axis (VA), and wherein the appliance contact element (5) with a normal (5N) of a contact surface (5F) for the electrical connection (eV) is oriented non-orthogonally, in particular parallel, in particular coaxially, to the connecting axis (VA), and wherein the device contact element (6) with a normal (6N) of a contact surface (6F) for the electrical connection (eV) is oriented non-orthogonally, in particular parallel, in particular coaxially, to the connecting axis (VA),
- wherein the gardening, forestry or construction work appliance (2) is a saw, in particular a chainsaw, a pole-mounted pruner, a set of hedge clippers, a hedge cutter, an undergrowth cutter, a lopper, a blowing appliance, a leaf blower, a suction appliance, a leaf vacuum, a cleaning appliance, a high-pressure cleaner, a sweeper roller, a sweeping brush, a scarifier, a lawnmower, a brushcutter or a cut-off saw,
- wherein the device (3) has an electrical recording and evaluation device and an electrical communication interface, wherein the recording and evaluation device is designed for recording the operating data (BD) and/or the variable (G), wherein the recording and evaluation device is designed for evaluating the recorded variable (G) for determining the operating data (BD) and/or the recorded and/or determined operating data (BD) for determining the information (Info), and wherein the communication interface is designed for wirelessly transmitting the operating data (BD) and/or the information (Info),
- wherein the gardening, forestry or construction work appliance (2) and the device (3) are designed for the electrical connection (eV) with each other by means of at least one direct touch of the appliance contact element (5) and the device contact element (6) with each other, and
- wherein the gardening, forestry or construction work system (1) is designed for the force application (FB) of the appliance contact element (5) and the device contact element (6) in direct touch with each other on each other,
- **characterized in that** the connecting element (4) is a screw (4'), and the appliance contact element (5) has a ring (10) or a fork, in particular of a cable lug (11), in particular is a ring (10) or a fork, wherein the device contact element (6) has a ring (12) or a fork, in particular of a cable lug, in particular is a ring (12) or a fork.

2. Gardening, forestry or construction work system (1) according to the preceding claim,
- wherein the gardening, forestry or construction work appliance (2), in particular the motor drive system (7) of the gardening, forestry or construction work appliance (2), is designed for operation independently of the device (3).

3. Gardening, forestry or construction work system (1) according to any of the preceding claims,
- wherein the gardening, forestry or construction work appliance (2) has a user operating handle (9), and
- wherein the gardening, forestry or construction work appliance (2) and the device (3) are designed for the arrangement of the device (3) on, in particular in, the user operating handle (9).

4. Gardening, forestry or construction work system (1) according to any of the preceding claims,
- wherein the gardening, forestry or construction work system (1) is designed for an user-operable adjusting of the connecting element (4) from the connecting position (VS) to the release position (FS).

5. Gardening, forestry or construction work system (1) according to any of the preceding claims,
- wherein the gardening, forestry or construction work system (1) is designed for the arrangement of the gardening, forestry or construction work appliance (2) and the device (3) on each other along an arrangement axis (AA) non-orthogonally, in particular parallel, in particular coaxially, to the connecting axis (VA).

6. Gardening, forestry or construction work system (1) according to any of the preceding claims,
- wherein the gardening, forestry or construction work appliance (2) has an appliance housing (14),
- wherein the device (3) has a device housing (15), and
- wherein the appliance contact element (5) is secured, in particular in a positively locking manner, with respect to the appliance housing (14), in particular is snapped or clamped into the appliance housing (14), in such a way and wherein the device contact element (6) is secured with respect to the device housing (15) in such a way that the appliance contact element (5) and the device contact element (6) are arranged on each other by the arrangement of the gardening, forestry or construction work appliance and the device on each other or the adjusting of the connecting element (4) from the release position (FS) to the connecting position (VS).

7. Gardening, forestry or construction work system (1) according to any of the preceding claims,
- wherein the gardening, forestry or construction work appliance (2) has an appliance housing (14), wherein the appliance housing (14) has a device receptacle (16), and
- wherein the gardening, forestry or construction work appliance (2) and the device (3) are designed for the arrangement comprising the device (3) being received in the device receptacle (16), in particular in such a way that an outer surface (14F) of the appliance housing (14) and an outer surface (15F) of a device housing (15) of the device (3) are flush.

8. Motor-driven hand-guided gardening, forestry or construction work appliance (2),
- wherein the gardening, forestry or construction work appliance (2) has at least one appliance contact element (5),
- wherein the gardening, forestry or construction work appliance (2) is designed for a gardening, forestry or construction work system (1) according to any of the preceding claims, wherein the gardening, forestry or construction work appliance (2) comprises the features of the gardening, forestry or construction work appliance (2) of the gardening, forestry or construction work system (1) according to any of the preceding claims, and
- wherein the at least one appliance contact element (5) interacts with the at least one device contact element (6) of the device (3) and the mechanical connecting element (4) of the gardening, forestry or construction work system (1).

9. Device (3),
- wherein the device (3) has at least one device contact element (6),
- wherein the device (3) is designed for a gardening, forestry or construction work system (1) according to any of Claims 1 to 7, wherein the device (3) comprises the features of the device (3) of the gardening, forestry or construction work system (1) according to any of Claims 1 to 7,
- wherein the at least one device contact element (6) interacts with the at least one appliance contact element (5) of the gardening, forestry or construction work appliance (2) and the mechanical connecting element (4) of the gardening, forestry or construction work system (1), and
- wherein the device (3) is designed for recording operating data (BD) of the motor drive system (7) of the gardening, forestry or construction work appliance (2) and/or a variable (G) characteristic of operating data (BD) of the motor drive system (7) by means of the electrical connection (eV) and for wirelessly transmitting the operating data (BD) and/or information (Info) based on the operating data (BD) and/or the variable (G).

## Revendications

1. Système de traitement pour jardins, forêts ou chantiers (1),
- le système de traitement pour jardins, forêts ou chantiers (1) comportant un appareil de traitement pour jardins, forêts ou chantiers (2) à guidage manuel et à entraînement motorisé, un dispositif (3) et au moins un élément de liaison (4) mécanique,
- l'appareil de traitement pour jardins, forêts ou chantiers (2) comportant un système d'entraînement motorisé (7) destiné à entraîner un outil de l'appareil de traitement pour jardins, forêts ou chantiers (2),
- le dispositif (3) étant formé pour détecter des données de fonctionnement (BD) du système d'entraînement motorisé (7) de l'appareil de traitement pour jardins, forêts ou chantiers (2) et/ou une grandeur (G) caractéristique de données de fonctionnement (BD) du système d'entraînement motorisé (7) au moyen d'au moins une liaison électrique (eV) et pour transmettre sans fil les données de fonctionnement (BD) et/ou une information (Info) sur la base des données de fonctionnement (BD) et/ou de la grandeur (G),
- le dispositif (3) comportant au moins un élément de contact de dispositif (6),
- l'appareil de traitement pour jardins, forêts ou chantiers (2) comportant au moins un élément de contact d'appareil (5),
- l'appareil de traitement pour jardins, forêts ou chantiers (2) et le dispositif (3) étant formés pour la liaison électrique (eV) entre eux au moyen au moins de l'élément de contact d'appareil (5) et l'élément de contact de dispositif (6) et pour au moins une liaison mécanique (mV) entre eux au moyen de l'élément de liaison (4), et
- le système de traitement pour jardins, forêts ou chantiers (1) étant formé pour ajuster l'élément de liaison (4) d'une position de libération (FS) pour libérer une disposition de l'appareil de traitement pour jardins, forêts ou chantiers (2) avec l'élément de contact d'appareil (5) et du dispositif (3) avec l'élément de contact de dispositif (6) l'un sur l'autre dans une position de liaison (VS) pour former la liaison mécanique (mV),
- le système de traitement pour jardins, forêts ou chantiers (1) étant formé par ajuster l'élément de liaison (4) de la position de libération (FS) dans la position de liaison (VS) pour fixer la liaison électrique (eV) pour soumettre l'élément de contact d'appareil (5) et de l'élément de contact de dispositif (6) à l'action d'une force (FB),
- l'élément de liaison (4) touchant et/ou traversant, dans la position de liaison (VS), l'élément de contact d'appareil (5) et l'élément de contact de dispositif (6),
- le système de traitement pour jardins, forêts ou chantiers (1) étant formé pour ajuster l'élément de liaison (4) de la position de libération (FS) dans la position de liaison (VS) indépendamment de l'agencement de l'appareil de traitement pour jardins, forêts ou chantiers (2) et du dispositif (3) l'un sur l'autre,
- l'élément de liaison (4) étant électriquement conducteur dans la position de liaison (VS) au moins dans la zone de l'élément de contact d'appareil (5) et dans la zone de l'élément de contact de dispositif (6),
- le système de traitement pour jardins, forêts ou chantiers (1) étant formé pour ajuster l'élément de liaison (4) de la position de libération (FS) dans la position de liaison (VS) le long d'un axe de liaison (VA), et l'élément de contact d'appareil (5) étant orienté avec une normale (5N) d'une surface de contact (5F) par rapport à l'axe de liaison (VA), de manière non orthogonale, en particulier de manière parallèle, en particulier de manière coaxiale, à la liaison électrique (eV), et l'élément de contact de dispositif (6) étant orienté avec une normale (6N) d'une surface de contact (6F) par rapport à l'axe de liaison (VA), de manière non orthogonale, en particulier de manière parallèle, en particulier de manière coaxiale, par rapport à la liaison électrique (eV),
- l'appareil de traitement pour jardins, forêts ou chantiers (2) étant une scie, en particulier une scie à chaîne, une perche d'élagage, une cisaille pour haies, un taille-haie, une scie de jardin, un coupe-branches, un souffleur, un souffleur de feuilles, un appareil d'aspiration, un aspirateur à feuilles, un appareil de nettoyage, un nettoyeur haute pression, un rouleau de balayage, une brosse de balayage, un scarificateur, une tondeuse à gazon, une débroussailleuse ou une tronçonneuse à meule,
- le dispositif (3) comportant un équipement électrique de détection et d'évaluation et une interface électrique de communication, l'équipement de détection et d'évaluation étant formé pour détecter les données de fonctionnement (BD) et/ou la grandeur (G), l'équipement de détection et d'évaluation étant formé pour évaluer la grandeur (G) détectée pour la détermination des données de fonctionnement (BD) et/ou des données de fonctionnement (BD) détectées et/ou déterminées pour la détermination de l'information (Info), et l'interface de communication étant formée pour transmettre sans fil les données de fonctionnement (BD) et/ou l'information (Info),
- l'appareil de traitement pour jardins, forêts ou chantiers (2) et le dispositif (3) étant formés pour la liaison électrique (eV) l'un à l'autre au moyen d'au moins un contact direct de l'élément de contact d'appareil (5) et de l'élément de contact de dispositif (6), et
- le système de traitement pour jardins, forêts ou chantiers (1) étant formé pour soumettre l'élément de contact d'appareil (5) et l'élément de contact de dispositif (6) à l'action d'une force (FB) en contact direct l'un sur l'autre,
- **caractérisé en ce que** l'élément de liaison (4) est une vis (4'), l'élément de contact d'appareil (5) comporte une bague (10) ou une fourche, en particulier une cosse de câble (11), en particulier est une bague (10) ou une fourche, l'élément de contact de dispositif (6) comportant une bague (12) ou une fourche, en particulier une cosse de câble, en particulier une bague (12) ou une fourche.

2. Système de traitement pour jardins, forêts ou chantiers (1) selon la revendication précédente,
- l'appareil de traitement pour jardins, forêts ou chantiers (2), en particulier le système d'entraînement motorisé (7) de l'appareil de traitement pour jardins, forêts ou chantiers (2), étant formé pour fonctionner indépendamment du dispositif (3).

3. Système de traitement pour jardins, forêts ou chantiers (1) selon l'une des revendications précédentes,
- l'appareil de traitement pour jardins, forêts ou chantiers (2) comportant une poignée de commande pour utilisateur (9), et
- l'appareil de traitement pour jardins, forêts ou chantiers (2) et le dispositif (3) étant formés pour disposer le dispositif (3) sur, en particulier dans, la poignée de commande pour utilisateur (9).

4. Système de traitement pour jardins, forêts ou chantiers (1) selon l'une des revendications précédentes,
- le système de traitement pour jardins, forêts ou chantiers (1) étant formé pour ajuster par actionnement de l'utilisateur l'élément de liaison (4) de la position de liaison (VS) dans la position de libération (FS).

5. Système de traitement pour jardins, forêts ou chantiers (1) selon l'une des revendications précédentes,
- le système de traitement pour jardins, forêts ou chantiers (1) étant formé pour disposer l'appareil de traitement pour jardins, forêts ou chantiers (2) et le dispositif (3) l'un sur l'autre le long d'un axe de disposition (AA) non orthogonal, en particulier parallèle, en particulier coaxial, par rapport à l'axe de liaison (VA).

6. Système de traitement pour jardins, forêts ou chantiers (1) selon l'une des revendications précédentes,
- l'appareil de traitement pour jardins, forêts ou chantiers (2) comportant un boîtier d'appareil (14),
- le dispositif (3) comportant un boîtier de dispositif (15), et
- l'élément de contact d'appareil (5) étant maintenu par rapport au boîtier d'appareil (14), en particulier par complémentarité de forme de telle manière, en particulier étant encliqueté ou serré dans le boîtier d'appareil (14) de telle manière, et l'élément de contact de dispositif (6) étant maintenu par rapport au boîtier de dispositif (15) de telle manière que l'élément de contact d'appareil (5) et l'élément de contact de dispositif (6) sont disposés l'un sur l'autre par la disposition de l'appareil de traitement pour jardins, forêts ou chantiers et du dispositif l'un sur l'autre ou par l'ajustement de l'élément de liaison (4) de la position de libération (FS) dans la position de liaison (VS).

7. Système de traitement pour jardins, forêts ou chantiers (1) selon l'une des revendications précédentes,
- l'appareil de traitement pour jardins, forêts ou chantiers (2) comportant un boîtier d'appareil (14), le boîtier d'appareil (14) comportant un réceptacle de dispositif (16), et
- l'appareil de traitement pour jardins, forêts ou chantiers (2) et le dispositif (3) comportant un logement du dispositif (3) étant formés pour la disposition dans le logement de dispositif (16), en particulier de telle manière qu'une surface extérieure (14F) du boîtier d'appareil (14) et une surface extérieure (15F) d'un boîtier de dispositif (15) du dispositif (3) sont en affleurement.

8. Appareil de traitement pour jardins, forêts ou chantiers (2) à guidage manuel à entraînement motorisé,
- l'appareil de traitement pour jardins, forêts ou chantiers (2) comportant au moins un élément de contact d'appareil (5),
- l'appareil de traitement pour jardins, forêts ou chantiers (2) étant formé pour un système de traitement pour jardins, forêts ou chantiers (1) selon l'une des revendications précédentes, l'appareil de traitement pour jardins, forêts ou chantiers (2) comprenant les caractéristiques de l'appareil de traitement pour jardins, forêts ou chantiers (2) du système de traitement pour jardins, forêts ou chantiers (1) selon l'une des revendications précédentes, et
- l'au moins un élément de contact d'appareil (5) coopérant avec l'au moins un élément de contact de dispositif (6) du dispositif (3) et l'élément de liaison (4) mécanique du système de traitement pour jardins, forêts ou chantiers (1).

9. Dispositif (3),
- le dispositif (3) comportant au moins un élément de contact de dispositif (6),
- le dispositif (3) étant formé pour un système de traitement pour jardins, forêts ou chantiers (1) selon l'une des revendications 1 à 7, le dispositif (3) comprenant les caractéristiques du dispositif (3) du système de traitement pour jardins, forêts ou chantiers (1) selon l'une des revendications 1 à 7,
- l'au moins un élément de contact de dispositif (6) coopérant avec l'au moins un élément de contact d'appareil (5) de l'appareil de traitement pour jardins, forêts ou chantiers (2) et l'élément de liaison (4) mécanique du système de traitement pour jardins, forêts ou chantiers (1), et
- le dispositif (3) étant formé pour détecter des données de fonctionnement (BD) du système d'entraînement motorisé (7) de l'appareil de traitement pour jardins, forêts ou chantiers (2) et/ou une grandeur (G) caractéristique de données de fonctionnement (BD) du système d'entraînement motorisé (7) au moyen de la liaison électrique (eV) et pour transmettre sans fil les données de fonctionnement (BD) et/ou une information (Info) sur la base des données de fonctionnement (BD) et/ou de la grandeur (G).
